# EUROPEAN PATENT APPLICATION

(11) **EP 1 736 309 A1**
(43) Date of publication of application: **27.12.2006**
(21) Application number: 05447143.8
(22) Date of filing: 21.06.2005
(51) Int. Cl.: B32B 27/32, B65B 9/20

(54) **VFFS/HFFS packaging obtained by direct contact seal**

(71) Applicant: Amcor Flexibles A/S, 8700 Horsens (DK)
(72) Inventor: Verlodt, Ingeborg, B-9810 Eke (BE); Daelmans, Eddy, B-3650 Dilsen-Stokkem (BE); Malfait, Tony, B-8880 Rollegem-Kapelle (BE)
(74) Representative: Van Malderen, Michel

(57) **Abstract**

The present invention relates to a VFFS/HFFS packaging obtained by direct contact seal, comprising a coextruded multilayer film comprising a first polyolefin based seal layer with a melting temperature below 135°C and a second polypropylene based support layer with a melting temperature higher than 135°C, the difference between the melting temperatures of said first layer and said second layer being higher than 20°C and the elasticity modulus of said second support layer being between 300 and 1800 N/mm².

## Description

### Field of the invention

The present invention relates to packaging and in particular to a VFFS/HFFS packaging obtained by direct contact seal and comprising a coextruded multilayer polyolefin film for direct seal applications, exhibiting characteristics of laminated high modulus multilayer films.

### Definitions

High modulus multilayer films are generally "supported films" which are multilayer structures comprising a direct contact sealable polyolefin layer laminated with or coated on a support layer exhibiting a high elasticity modulus in machine extrusion direction such as polypropylene, polyamide, polyester, polyethylene and polylactic acid. A high elasticity or stiffness of these films is often obtained by stretching in an orientation process.

Vertical or horizontal form fill and seal packagings (VFFS/HFFS) are obtained according to a vertical or horizontal form fill and seal process well known by those skilled in the art and described in The Wiley Encyclopaedia of Packaging Technology, J. Wiley & Sons, N.Y. (1986).

Direct contact sealing, also called bar sealing, is the heat-seal process in which two films are joined together by placing them in direct contact between heated platens. The variables of the heating process (platen temperature, dwell time and pressure) and the effect on the resulting seal properties are widely documented and studied in the literature. See e.g. F.C. Stehling and P. Mekka in the Journal of Applied Polymer Science, Vol. 51, 105-119 (1994).

Impulse seal, as opposed to contact sealing, makes use of an electric current that passes through a ribbon for a short period of time and which is turned off afterwards. In contrast to direct contact sealing the seal is cooled and the heat is removed before the sealing jaws are opened. An overview of this process and of the various sealing methods for plastics is described in The Wiley Encyclopaedia of Packaging Technology, J. Wiley & Sons, N.Y. (1986).

Conventional extrusion equipment should be understood as blown film, cast film or tandem extrusion as well as extrusion coating.

Polypropylene based support layer should be understood as a layer comprising at least 50 % of polypropylene

Low melting polyolefin seal layer should be understood as polyolefin's with a melting point (Tm) between 70 and 135°. This includes (1) all types of polyethylene homopolymers and alfa-olefine copolymers with a density below 0.955 g/cm3, (2) all types of PP copolymers and ter-polymers containing alfa-olefines such as ethylene, butene, pentene, 4-methyl-1-pentene, ... octene in an amount, depending on the reactor process and the catalyst system, and incorporated in a random, sequential or branched way, in order to decrease the PP matrix crystallinity and reduce the melting point below 135°C. (3) Included in this description is also metallocene catalyzed homo- and alfa-olefine co-polypropylene, syndiotactic polypropylene and polypropylene plastomers or elastomers with a density between 0.85-0.90/cm3. (4) A further subdivision of the definition includes poly 1-butene homopolymers and poly 1-butene alfa-olefine copolymers such as ethylene, butene, pentene, 4-methyl-1-pentene, ... octene.

### State of the art

Due to the intrinsic softness of polyethylene monolayer films or low melting point polyolefin films (Tm < 135°C) such e.g. as the new generation of low melting polyolefine "plastomers" (density : p < 0.910 g/cm3), these films need generally to be supported by a stiffer film, with a high elasticity modulus, to be printable at least according to a gravure process. Such an adequate elasticity modulus and a low elongation at break are requested to make printing in register possible and to keep the distance on the packaging line from eye mark to eye mark constant. This is the reason why low melting point polyolefin films are generally supported by means of adhesive or heat laminated stiffer polymers. Non limitative examples of such polymers are extrusion e.g. bioriented polypropylene, polyamide, polyester.

These different polymer combinations (seal and support layer) are characterised by a high melting temperature difference (> 50°C) between the outside (high melting temperature layer) and the inside (low melting point polyolefin films) of those multilayer films to guarantee a manageable seal range. This means that the outside layer can be heated up in a way that the inner layer melts enough to create a fusion seal (complete welding) while the outside layer stays solid and keeps its stability. Without a temperature difference between both layers of at least 20°C, a fusion seal is hardly achievable.

The particular properties of supported films are stiffness (high elasticity modulus), high tensile strength and a low elongation. Despite that such supported structures fulfil all the technical requirements needed for the realisation of a good VFFS/HFFS packaging, the lamination step of such film structures increases substantially the cost price of laminated (supported) films which is a considerable drawback for high volume and low price markets.

### Aims of the invention

The aim of the present invention is to disclose a VFFS/HFFS packaging obtained by direct contact seal comprising a coextruded unsupported multilayer film with a polyolefin seal layer of a low melting point (< 135°C) and a high elasticity modulus polypropylene based layer. Said unsupported multilayer film is processable on conventional extrusion equipment and has a large seal range (>20°C), a good stability in machine direction for in-register printing (in particular gravure printing), lap and/or peel sealability and offers the option of gas barrier possibilities with an optional functional layer.

### Summary of the invention

The present invention discloses a VFFS/HFFS packaging obtained by direct contact seal, comprising a coextruded multilayer film comprising a first polyolefin based seal layer with a melting temperature below 135°C and a second polypropylene based support layer with a melting temperature higher than 135°C, the difference between the melting temperatures of said first layer and said second layer being higher than 20°C and the elasticity modulus of said second support layer being between 300 and 1800 N/mm².

According to particular embodiments, the present invention comprises one or several of the following features:
- The difference between the melting temperatures of said first layer and said second layer being higher than 30°C and the elasticity modulus of said second support layer being between 600 and 1600 N/mm².
- The polyolefin based first layer comprises at least 30 % in weight of a polyolefine selected from the group consisting of a plastomer or an elasotmer with a density below 0.910 g/cm3.
- The first polyolefin based seal layer further comprises up to 70% in weight of an additional polymer selected from the group consisting of LDPE and/or LLDPE in order to improve the processability of said multilayer on conventional coextrusion equipment.
- The second support layer is a polypropylene homopolymer, a polypropylene alfa-olefine copolymer, a polypropylene heterophasic block copolymer or blends thereof.
- The multilayer film of the invention further comprises an additional functional multilayer influencing the gas permeability, the printability, the gloss, and/or the sealability.
- The first polyolefin based seal layer further comprises up to 30% of polybutene-1 for peel-seal applications.
- The first polyolefin based seal layer further comprises up to 10% of additives selected from the group consisting of antioxidants, slip agents, polymer processing agents, anti-blocking agents, anti-static agents and colour pigments.
- The polypropylene based support layer further comprises up to 10% of additives selected from the group consisting of antioxidants, slip agents, polymer processing agents, anti-blocking agents, anti-static agents and colour pigments.

The present invention further discloses a process for the production of a form, fill and seal packaging as in claim 1, wherein said multilayer film is sealed on itself and builds a fusion seal in the cross and/or longitudinal seal area.

### Detailed description of the invention and preferred embodiments

### Preliminary remark

All polymer densities are mentioned in g/cm3. All polymer viscosities (MFI) are mentioned in g/10min at 190°C and 2.16 Kg for the polyethylene based resins and at 230°C and 2.16 Kg for the polypropylene based layer.

The present invention is based on a coextruded film comprising at least two basic layers:
1. A first polyolefin based sealable layer (Tm< 135°C)
2. A second polypropylene based support layer (second layer)

The polyolefin based seal layer is sealable by direct contact sealing and is selected in order to provide direct adhesion with the polypropylene based support layer. In a particular embodiment of the present invention, this is possible without the need of a separate tie layer and without the addition of any compatibilizing agents.

Non limitative examples of relevant polyolefin types for the seal layer of the present invention are: plastomers and homogeneously branched VLDPE and ULDPE plastomers with p≤0.910 g/cm3, homogeneously branched LLDPE, propylene-ethylene copolymers, propylene-ethylene-butylene terpolymers and polypropylene plastomers with ρ≤0.900 g/cm3. Typical examples of such polyolefin types are Exact 0201 (Exxon/DSM, ρ=0.902 g/cm³, MFI=1 dg/min), Affinity® PL 1840 (Dow, ρ=0.910 g/cm³, MFI=1.0 dg/min), Eltex PKS 300 (BP, ρ=0.895 g/cm³, MFI=5 dg/min), Versify 2000 (Dow, ρ=0.888 g/cm³, MFI=2 dg/min).

In a first embodiment of the present invention, the polyolefin based sealable first layer can be further blended in a range of 0 to 70% in weight with LDPE, MDPE and HDPE in a density range ρ=0.915-0.955 g/cm) and/or LLDPE in a density range between 0.915-0.945 g/cm3 in order to facilitate the processing of the film on conventional film coextrusion lines, such as traditional blown film equipment.

Non limitative examples of relevant polyethylene types to be blended to said layer are Lupolen® 3020H (Basell, ρ=0.927 g/cm³, MI=2.0 dg/min), Lacqtene® 1020FH30 (Atofina, ρ=0.930 g/cm³, MI=2.0 dg/min), Dowlex® 2740E (Dow, ρ=0.940 g/cm³, MI=1.0 dg/min).

In a second embodiment of the present invention, the polyolefin based sealable layer can be further blended in a range of 0 to 30% with homo or alfa-olefine copolymer poly 1-butene in order to obtain a peelable seal layer. Non limitative examples of such PB-1 types are PB8340 (Basell, p=0.908, MI=4.0), PB8310 (Basell, ρ=0.895, MI=3.0), Tafmer® BL3110 (Mitsui, ρ=0.910, MI=1.0), Tafmer® BL4000 (Mitsui, ρ=0.915, MI=1.8).

Additives such as color pigments, antioxidants, slip agents, polymer processing agents, anti-blocking agents, anti-static agents, as known by those skilled in the art, are also present in this film in order to facilitate the processing of the film during extrusion, printing and packaging operations.

The PP based support layer comprises polypropylene providing good adhesion with layer. In a particular embodiment of the present invention, this is possible without the need of a separate tie layer or grafted tie-resins.

The polypropylene of the support layer provides excellent mechanical properties in terms of stiffness and tensile strength, and provides dimensional stability of the web during the further processing of the film consisting essentially of printing and packaging. Furthermore said polypropylene is easily processable on standard PE blown film equipment, provides good bubble stability and an even over-all thickness distribution. Non limitative examples of such materials are alfa-olefine - propylene random copolymers such as Moplen RP340H (Basell, p=0.9, MI=1.8), Inspire 112 (Dow, p=0.90, MFI=0.5), Borealis RB307MO (p=0.9, MI=1.5).

An optional transparent functional layer provides additional gloss to the film, printability, sealability and oxygen barrier properties. Non limitative example of a non-stretched structure according to the present invention is PPplastomer/PP/PPoutside corona treated, mPE based peel/PP outside corona treated, mPE/PP/tie/PA6, PPter-polymer/PP/tie/EVOH/tie/PPoutside corona treated.

**Examples according to the embodiments of the present invention** (All density are mentioned in g/cm3 and MFI in g/10min (190°C) for the seal layer and 230°C for the support layer)
**Example 1:** coextruded multilayer of 2 layers with a total thickness of 40 µm.
PO based first seal layer/ PP based second support layer.
- A first sealing layer: 30 µm Exact® 0201 HS (DSM/Exxon, density 0.902, MI=1, Tm=95°C)/Stamylan 2201TH00® (Sabic, density 0.922, MI=0.85, Tm=110°C), in a blend ratio of 90/10.
- A second support layer: 30 µm Inspire® 112 (Dow, density 0.90, MI=0.5, Tm 160°C)
Delta T° between the first and the second layer = 50°C
**Example 2:** coextruded multilayer of 3 layers with a total thickness of 50 µm.
PO based first layer/ PP based second layer/ Corona treated transparent PP functional layer of the following composition:
- A first sealing layer: 5 µm Exact® 0201 HS (DSM/Exxon, density 0.902, MI=1, Tm=95°C)/ Stamylan 2201TH00® (Sabic, density 0.922, MI=0.85, Tm=110°C), in a blend ratio of 80/20.
- A second support layer: 40 µm Inspire® 112 (Dow, density 0.90, MI=0.5 ,Tm=160°C)
- A third layer for corona treatment : 5 µm Moplen® RP340H (Basell, density 0.9, MI=1.8, Tm 145°C)
Delta T° between the first and the second layer = 50°C
**Example 3**: 60 µm coextruded film
PO based first layer/ PP based second layer/ Tie layer/Corona treated PA 6 functional barrier layer.
- First sealing layer: 5 µm Adsyl 7221XCP ® (Basell, density 0.89 g/cm3, MI=0.9 dg/min, Tm=133°C)
- Second support layer: 30 µm Borealis BB213CF® 114 (Borealis, density 0.90, MI=1.2, Tm=160°C)
- Tie layer: 5 µm Admer® QB510E (Mitsui, MI=3.0 dg/min)
- PA 6 functional barrier layer: 20 µm PA6 Akulon® F-132E (DSM)
Delta T° between the first and the second layer = 27°C
**Example 4:**
PO based peelable first layer/ PP based second layer/Corona treated transparent PP layer/ Tie layer/ EVOH/ Tie layer/ Functional layer containing transparent barrier layer.
- First sealing layer: 10 µm Affinity® FM1570 (Dow, density 0.915 g/cm3, MI=1.0 dg/min, Tm=110°C)/Basell PB1600SA® (Basell, density =0.919 g/cm3 , MI=1.0, Tm=110°C) : blend ratio 70/30 (as has been explicitly mentioned in this particular example this is a peelable layer)
- Second support layer: 40 µm Inspire® 112 (Dow, density 0.90 g/cm3, MI = 0.5 dg/min, Tm=160°C)
- Tie layer: 2.5 µm Admer® QB510E (Mitsui, MI=3.0 dg/min)
- Barrier layer: 5 µm Soarnol® ET 3803 (Nippon Goshei,MI=3.0 dg/min)
- Tie layer: 2.5 µm Admer® QB510E (Mitsui, MI=3.0 dg/min)
   - Functional layer: 10 µm Moplen® RP340H (Basell, density 0.9, MI=1.8, Tm 145°C)
Delta T° between the first and the second layer = 50°C
The elasticity modulus of different polypropylene polymer families are given in the following table:

| PP-type | E modulus in MD (MPa) Iso 527 |
|---|---|
| homopolymers | 600 - 1800 |
| alfa-olefine random copolymers | 300 - 1000 |
| random copolymers heterophasic block copolymers | 400 - 1100 |

## Claims

1. VFFS/HFFS packaging obtained by direct contact seal, comprising a coextruded multilayer film comprising a first polyolefin based seal layer with a melting temperature below 135°C and a second polypropylene based support layer with a melting temperature higher than 135°C, the difference between the melting temperatures of said first layer and said second layer being higher than 20°C and the elasticity modulus of said second support layer being between 300 and 1800 N/mm².

2. VFFS/HFFS packaging as in Claim 1, wherein the difference between the melting temperatures of said first layer and said second layer being higher than 30°C and the elasticity modulus of said second support layer being between 600 and 1600 N/mm².

3. VFFS/HFFS packaging as in Claim 1, wherein said polyolefin based first layer comprises at least 30 % in weight of a polyolefine selected from the group consisting of a plastomer or an elasotmer with a density below 0.910 g/cm3.

4. VFFS/HFFS packaging as in Claim 1, wherein said first polyolefin based seal layer further comprises up to 70% in weight of an additional polymer selected from the group consisting of LDPE and/or LLDPE in order to improve the processability of said multilayer on conventional coextrusion equipment.

5. VFFS/HFFS packaging as in Claim 1, wherein said second support layer is a polypropylene homopolymer, a polypropylene alfa-olefine copolymer, a polypropylene heterophasic block copolymer or blends thereof.

6. VFFS/HFFS packaging as in Claim 1, wherein said multilayer film further comprises an additional functional multilayer influencing the gas permeability, the printability, the gloss, and/or the sealability

7. VFFS/HFFS packaging as in Claim 1, wherein said first layer further comprises up to 30% of polybutene-1 for peel-seal applications.

8. VFFS/HFFS packaging as in Claim 1, wherein said first polyolefin based seal layer further comprises up to 10% of additives selected from the group consisting of antioxidants, slip agents, polymer processing agents, anti-blocking agents, anti-static agents and colour pigments.

9. VFFS/HFFS packaging as in Claim 1, wherein said polypropylene based layer further comprises up to 10% of additives selected from the group consisting of antioxidants, slip agents, polymer processing agents, anti-blocking agents, anti-static agents and colour pigments.

10. Process for the production of a form, fill and seal packaging as in Claim 1, wherein said multilayer film is sealed on itself and builds a fusion seal in the cross and/or longitudinal seal area.
